# EUROPEAN PATENT SPECIFICATION

(11) **EP 3 207 343 B1**
(45) Date of publication and mention of the grant of the patent: **19.02.2020**
(21) Application number: 15770904.9
(22) Date of filing: 29.09.2015
(51) Int. Cl.: G01F 11/26

(54) **METHOD FOR REPEATEDLY FEEDING A CLEANSING LIQUID INTO A DEVICE FOR SPRAYING**
VERFAHREN ZUR REPEATIERTEN EINFÜHRUNG EINER REINIGUNGSFLÜSSIGKEIT IN EINEM GERÄT ZUM SPRÜHEN
PROCÉDÉ D'ALIMENTATION RÉPÉTÉE D'UN LIQUIDE NETTOYANT DANS UN DISPOSITIF DE PULVÉRISATION

(30) Priority: 14.10.2014 EP 14188874
(43) Date of publication of application: 23.08.2017
(73) Proprietor: Unilever NV, 3013 AL Rotterdam (NL); Unilever PLC, London, Greater London EC4Y 0DY (GB)
(72) Inventor: CHOI, Hei Wai, Hong Kong (CN)
(74) Representative: Corsten, Michael Allan
(86) International application number: PCT/EP2015/072315
(87) International publication number: WO 2016/058818

(56) References cited:
- EP-A1- 2 775 051
- US-A1- 2009 159 620

## Description

### FIELD OF THE INVENTION

The present disclosure relates to a cap for a cartridge. In particular, the disclosure relates to a cap for a cartridge for a device for spraying a cleansing or disinfecting liquid into an enclosure closable by a rotatable lid. More in particular, it relates to such a cap wherein the enclosure is a toilet bowl. The disclosure also relates to a cartridge system comprising a cartridge and foresaid cap and a spraying system. In addition, the invention also relates to a method for repeatedly feeding a cleansing liquid into a device for spraying a cleansing liquid into an enclosure closable by a rotatable lid.

### BACKGROUND TO THE INVENTION

Water toilets are a wide-spread utility. Although many people use them more than once a day, only few people like cleaning them. However, in view of the importance of domestic and/or public hygiene, toilets need to be cleaned regularly. Apart from the objective need for sanitary hygiene, most users prefer using a clean toilet. Therefore it is highly desirable to provide means that will reduce the effort required to clean a toilet. At the same time it is especially desirable that such means also provide good under-the-rim cleaning, as this a place where dirt, scale and/or microorganisms are often suspected to accumulate.

Moreover, it is well known that every time the toilet is flushed after use, thousands of bacteria and virus particles are catapulted into the air, travelling as far as two meters or more out of and up from the toilet bowl as a fine invisible mist. An existing hypothesis refers to the greatest bacterial mist dispersal occurring not during the initial moments of the flush, but rather once most of the water has already left the bowl.

The bacterial mist can remain airborne for over two hours, floating around in the air and spreading over the room to finally settle on and thus contaminating the available surfaces around the toilet. This spread of faeces-originating bacteria and/or viruses over the bathroom is undesirable with respect to hygiene and could even cause serious health problems. Examples of surfaces on which deposition of pathogenic micro-organisms or viruses is highly undesirable are toothbrushes, hairbrushes, light switches, and the toilet paper.

There is thus a need to reduce or prevent the spread of active airborne micro-organisms and viruses from the toilet after flushing, in particular when pathogenic micro-organisms are involved.

Several attempts have been made to solve the problem of these airborne micro-organisms and viruses.

US5906009 discloses a toilet bowl that has gases and bacteria or virus-laden mist removed directly therefrom by an air evacuation system, both during and after use of the toilet. The disadvantage of such a solution is that it requires a special toilet bowl and a separate and relatively expensive air evacuation system.
A potential solution is to provide a device that can automatically spray an amount of cleanser liquid into a toilet bowl.
For example, DE316560C discloses a toilet lid provided with a dispenser for a cleaning liquid built-in into the lid. FR2610815 discloses a solution wherein a reservoir is present behind the toilet lid. In both cases there is the drawback that a special toilet lid and/or seat is required, replacing the normal toilet lid.

It therefore appears desirable to have a device that can be mounted under a standard toilet bowl lid. With respect to devices that are attached to the rim of the toilet, this has the advantage that a more even distribution of cleaning/disinfecting liquid can be obtained.

Thus, DE2851139A for instance discloses a spraycan mounted in a holder that is attached to the lid. This has the drawback that such cans need to withstand the pressure of the propellant, which puts severe constraints on the design of such a device.

Another constraint to the design of a lid-mounted toilet cleaning device is its size, in particular its height taken from the (bottom) surface of the toilet lid. If the device is too bulky, it will be uncomfortable for a user sitting on the toilet.

Alternatively, WO99/17650 A1 discloses a device for discharging a fragrance, detergent or disinfectant into a toilet bowl. It includes a reservoir and a dispensing element. The reservoir can for instance be replaceably mounted to the toilet lid. In one embodiment, the device exploits the rotation of the toilet lid between an open and a closed orientation to charge and dispense a portion of liquid into the toilet bowl. The device also depends on gravity for dispensing the liquid, which falls from the mouthpiece of the device into the toilet bowl. However, to obtain a reasonably even spread of liquid over the inner surface of the toilet bowl, active spraying is very desirable. A drawback of this device is that to obtain any spraying functionality, a spraying mechanism would either need to be positioned below the reservoir or an active mechanism to extract the liquid from the reservoir, involving for example a dip-tube, would be required.

Both are undesirable from the point of view of the above size constraints and general complexity of the device.

Another drawback of the portioning device of WO'650 is that it seems incapable of completely emptying the reservoir. In general, dispensing systems such as bottles, tubes, cartridges that cannot be fully emptied belong to the highest ranking consumer annoyances.

EP 2 775 051 A1 discloses a method for repeatedly feeding a cleansing liquid into a device for spraying a cleansing liquid into an enclosure closable by a rotatable lid, that comprises the steps of providing a spraying system with a cartridge having a reservoir and a cap comprising a cover area and a collection trough and bringing the device and the cartridge in an orientation wherein cleansing liquid can flow from the reservoir.

It is therefore an object of the present invention to provide a method for repeatedly feeding a cleansing liquid into a device for spraying a cleansing liquid into an enclosure closable by a rotatable lid according to claim 1, wherein a cartridge system for a device for spraying the liquid, in particular of a cleaning/disinfecting liquid into a toilet bowl which overcomes one or more of the problems or drawbacks of systems according to the prior art. It particularly is an object of the present invention to provide said method comprising such a cartridge system for a spraying device that is mountable to the lid of a toilet. It is highly desirable that such a cartridge is replaceable.

Furthermore, it is an object of this invention to provide said method comprising a cartridge system that can be completely emptied during use, in particular exploiting the opening and closing movement of a toilet lid.

It is another object of the present invention to provide said method comprising a cartridge system that is relatively easy to manufacture and/or that provides flexibility in the design of the reservoir space of such a cartridge. Thus it also is an object of the present invention to reduce the complexity of the cartridge of said method, and in particular the complexity of replaceable cartridges.

It is a further object of the present invention to provide said method comprising a cartridge system that combines desirable functionalities, such as replaceability, easy liquid extraction into a spraying device, and reduced complexity whilst allowing complete emptying of the reservoir.

It is another object of the present invention to provide said method including parts of a cartridge system that enable it to meet one or more of these objects. Such parts include for instance a cartridge (that is a body including a reservoir) and a cap.

It is yet another object of the present invention to provide said method comprising a device for spraying a cleansing or disinfecting liquid into an enclosure, in particular a toilet bowl, that is equipped to receive a cartridge system according to the invention, or that actually carries such a cartridge.

### DEFINITION OF THE INVENTION

We have found that one or more of these objects can be achieved by a method for repeatedly feeding a cleansing liquid into a device for spraying a cleansing liquid into an enclosure closable by a rotatable lid according to claim 1, and by providing a cap for a cartridge, comprising a particular trough extending from the cover area of the cap.

The invention provides said method comprising such a cap, configured to be used with a cartridge for a device for spraying a liquid into an enclosure closable by a rotatable lid, typically a toilet bowl. Upon use, the cap makes it possible to completely empty a cartridge upon repeated use of the spraying device by exploiting rotary movement of the spraying device and cartridge attached to it between a charging and a dispensing orientation. Moreover, the cap allows avoiding that air is led into the spraying device instead of liquid. The rotary movement typically corresponds to the opening and closing of a rotatable lid on an enclosure such as for example a toilet bowl. Thus, when used in such a configuration, the cap provides flexibility in the design of the cartridge, because a dip tube or the like is not required in combination with this cap. It also provides much more freedom with respect to the design of both the spraying device and the cartridge, because the cartridge need not be located above the device when it is in the dispensing orientation. Typically, the cartridge can be placed aside of the device, thus allowing for a much flatter design of the spraying system. Therefore, the solution according to this invention also provides much more freedom in selecting an optimal volume for the cartridge of said method, which is no longer restricted by height requirements.

Accordingly, the invention provides said method comprising a cap for a cartridge, said cartridge comprising a reservoir opening into a neck; wherein the cap is suitable for closing off the neck, and wherein the cap comprises a cover area and a collection trough extending from the cover area on the inward side of the cap; wherein at least a side-wall portion of the collection trough is integral with the cover area and wherein the cover area comprises a liquid outlet orifice positioned close to the bottom of the collection trough.

It is highly preferred that the cap is for a cartridge for a device for spraying an enclosure closable by a rotatable lid. It is even more preferred that the enclosure is a toilet bowl and the device is mountable to the lid of the toilet bowl.

The cap is intended to be suitable for cooperation with a cartridge for a device for spraying device. Therefore, according to the invention, there is provided said method comprising a cartridge system for a device for spraying an enclosure that is closable with a rotatable lid, said system comprising a cartridge having a reservoir opening into a neck having an outlet opening, and a cap, wherein the cap is receivable by the outlet opening of the cartridge.

The cartridge system is intended to be suitable for cooperating with a spraying device. Therefore, according to the invention, there is provided said method comprising a spraying system, comprising a device for spraying a liquid into an enclosure closable by a rotatable lid and a cartridge system, wherein the cartridge system is receivable by the spraying device.

The present invention provides a method for repeatedly feeding a cleansing liquid into a device for spraying a cleansing liquid into an enclosure closable by a rotatable lid, said method comprising the steps of
a. providing a spraying system said spraying system comprising the device for spraying the liquid into the enclosure closable by the rotatable lid and a cartridge system for the device for spraying the enclosure that is closable with the rotatable lid; said system comprising a cartridge having a reservoir opening into a neck having an outlet opening, and a cap for said cartridge; wherein the cap is suitable for closing off the neck, and wherein the cap comprises a cover area and a collection trough extending from the cover area on the inward side of the cap; wherein at least a side-wall portion of the collection trough is integral with the cover area and wherein the cover area comprises a liquid outlet orifice positioned close to the bottom of the collection trough; wherein the cap is receivable by the outlet opening of the cartridge; wherein the cartridge is attached to the device and wherein the cartridge comprises the cleansing liquid;
b. bringing the device and the cartridge (2) in an orientation wherein cleansing liquid can flow from the reservoir (3) into the neck (4);
c. rotating the device and the cartridge from that orientation to an orientation wherein the side-walls of the collection trough are in an upward direction with respect to the bottom of the trough, such that a portion of the cleansing liquid is collected in the trough;
d. emptying said portion of cleansing liquid into the liquid spraying mechanism of the spraying device via the outlet orifice; and
e. optionally repeating steps b to d.

For this method, it is highly preferred that the enclosure is a toilet bowl and the spraying system is mountable to the toilet lid.

An other aspect not forming part of the invention is use of a cap to enable emptying of a cartridge upon repeated rotational movement of the cartridge; wherein the cartridge comprises a reservoir opening into a neck, and wherein the cartridge and the cap are configured for the cap to be received by the neck of the cartridge.

### BRIEF DESCRIPTION OF FIGURES

**Figure 1** shows a longitudinal cross section of a schematic representation of a first embodiment of the cap of the method of the present invention.
**Figure 2** provides a transversal cross section of a schematic representation of the same embodiment as in Figure 1.
**Figure 3** shows the cross section of Figure 1 in the charging orientation.
**Figure 4** shows the cross section of Figure 3 in the dispensing orientation.
**Figure 5** provides a transversal cross section of a schematic representation of a second embodiment of the cap of the method of the present invention.

### DETAILED DESCRIPTION OF THE INVENTION

For the avoidance of doubt, any feature of one aspect of the present invention may be utilised in any other aspect of the invention. The word "comprising" is intended to mean "including" but not necessarily "consisting of" or "composed of." Thus, the term "comprising" is meant not to be limiting to any subsequently stated elements but rather to optionally also encompass non-specified elements of major or minor functional importance. In other words, the listed steps or options need not be exhaustive. Whenever the words "including" or "having" are used, these terms are meant to be equivalent to "comprising" as defined above. It is noted that the examples given in the description below are intended to clarify the invention and are not intended to limit the invention to those examples per se.

Except in the examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated.

The term sanitising as used in this application refers to a lower level of germ control, killing about 50 to 75% of the germs present on a surface or in the air.

For the purposes of this patent, disinfecting can be understood as a higher level of germ control than meant with sanitising (i.e. over 75% germ kill). Under controlled conditions a disinfecting solution provides a 100,000 fold or better reduction in the number of viable micro-organisms (using a specific culture that is treated with the disinfecting solution for an appropriate time period, normally 5 minutes). This is generally known as a '5 log reduction'.

Where, in the context of this description, the term "upward" refers to the orientation of one or more elements of the cap, cartridge or device of the method of the invention, this term is understood as not being limited to an exactly vertical orientation, yet to include orientations with a sufficient upward component as will be clear from the specific context. Thus, for example, a wall extending upwardly may for instance be straight or bended and may also be slanted. Likewise, the term "downward" is not limited to an exactly vertical orientation, but includes orientations with a sufficient downward component as will be clear from the specific context.

Where in the context of this description features and/or properties are described for a cartridge these features and/or properties relate to and are preferred for (as the case may be) any cartridge, including the cartridge for which the cap according to the method of the invention is suitable, the cartridge of the cartridge system according to the method of the invention and the cartridge that is comprised in the spraying system of the method of the invention.

Likewise, where in the context of this description features and/or properties are described for a device for spraying these features and/or properties relate to and are preferred for (as the case may be) any such device, including the device for which the cap of the method of the invention and the cartridge system of the method of the invention are suitable and the spraying device of the spraying system of the method of the invention.

### Cap for a cartridge

The method of the invention comprises a cap for a cartridge. The cartridge comprises a reservoir opening into a neck; wherein the cap is suitable for closing off the neck.

A cap is understood to be a closure, that is, a means of closing an opening, in particular the opening of a neck of a cartridge. The cap is suitable for closing off the neck. Typically such a closure provides a leak-tight seal around the opening of the neck, but the cap being a closure does not exclude the presences of inlet or outlet orifices and similar features to be present in the cap. Typically, such orifices communicate with corresponding features in a device as will be explained below.

It is highly preferred that the cap is for a cartridge for a device for spraying an enclosure closable by a rotatable lid.

Such a spraying device is capable of delivering a liquid in an enclosure, in the form of droplets fine droplets (i.e. a mist or an aerosol). Typically, this delivery is realised by atomising or nebulising the liquid cleanser.

### Cartridge

In the context of this description, the cartridge is intended to contain the stock of liquid to be sprayed by the spraying device. The cartridge therefore comprises a reservoir for containing the liquid cleanser.

The cartridge is suitable for use with a spraying device. This means that it is attachable to that device, typically such that the reservoir can communicate with the a dispensing means of the spraying device, for example via connection means including the cap of the method of the present invention and other transport and conduit means as understood by the skilled person.

The attachability of the cartridge may mean that it can be permanently attached to the device. It is preferred however, that the cartridge can be replaceably attached to the spraying device. Such replaceability is desirable, for instance when the reservoir is empty or exchange of the cleanser is desired.

Preferably, the cartridge and the spraying device are constructed such that it is easy for the user to re-load the device with the disinfecting or sanitising cleansing fluid, even when in use the device is attached or attachable to a (toilet) lid. One option of reloading the device is by re-filling the reservoir with the disinfecting or sanitising fluid without having to remove the cartridge with from the device and/or lid. A second and third option are also enabled by the above detachable cartridge. The second option of reloading the device is by removing the cartridge from the device and/or lid, re-filling the removed reservoir, followed by placing the re-filled reservoir back in the device and/or on the lid. The third option of reloading the device is by replacing the empty cartridge by a loaded cartridge.

The volume of the reservoir may fall within the range of from 5 to 200 ml, preferably from 10 to 150 ml, more preferably from 15 to 100 ml, even more preferably from 30 to 60 ml and most preferably about 50 ml. In order to enable dispensing liquid from the cartridge, it has a neck, such that the reservoir opens into the neck. As is generally understood, the opposite side of such a neck opens to the outside. Thus a neck provides part of the interior volume of the cartridge, but the neck usually is relatively narrow compared to the reservoir. Preferably, the cartridge is shaped such that the neck is suitable for collecting liquid from the reservoir when the cartridge is brought in the recharging orientation. The neck is also adapted to receive the cap, such that the cap is suitable for closing off the neck. The cross section of the neck may have any suitable shape, including for instance circular, oval, or square. A circular cross section is prefered.

Normally, the recharging orientation would involve a situation in which the neck is located below at least part of the reservoir, such that in operation, at least a portion of the liquid in the reservoir would flow to and assemble in the neck. Therefore, it is preferred that the portion of the wall of the cartridge that contains the neck is planar or convex. Thus, the shape of the reservoir would facilitate collection of the liquid in the neck. Otherwise, the shape and proportions of the cartridge can be chosen so as to suit any other technical and aesthetic requirements. Thus, as will become clear below, the present invention provides great freedom to the skilled person with respect to the shape and other design features of the cartridge of the method, as long as the above basic functionality is provided. Typically, the shape may be made to match that of the device with which the cartridge is intended to cooperate. Additionally, the cartridge may also comprise other exterior features, for instance to facilitate fastening of the cap to the cartridge or of the cartridge to a spraying device.

### Enclosure

The cap, the cartridge system and the spraying system according to the method of the invention can be used in any enclosure closable by a rotatable lid. The enclosure may be any enclosed space. Here, the term enclosure is not understood to be limited to hermetically closed spaces as will be evident from this description. Preferably, the device is suitable for dispensing a cleanser of disinfectant composition in a sanitary enclosure. Examples of sanitary enclosures include a toilet room, a toilet bowl, a bathroom, a shower cabinet, a sauna. Alternatively it is preferred that the enclosure is a domestic appliance comprising a cleanable internal space, including a washing machine, a mechanical dish washer, and the like. In yet another preferred embodiment, the enclosure is a container for waste, including for example a dustbin or a wheelie bin. It is particularly preferred that the enclosure is a toilet bowl.

The inner volume of the toilet bowl is defined by the space enclosed by the toilet bowl, the water in the bowl, and the toilet lid when the lid is in the closed (lowered) position. Thus, this volume also includes the space under the rim of the toilet, if such a rim is present. The bottom-side of the toilet lid is the side of the lid that faces the inner side of the toilet bowl when it is in its closed (lowered) position.

Since the spraying device of the spraying system of the method of the invention as well as the cap according to the method of the present invention is preferably operated by repeatedly bringing it into the preferred recharging and dispensing orientations, respectively, (as described below) it is very desirable that the device is attachable to a rotatable surface. Therefore, the enclosure is equipped with a rotatable lid, wherein the lid typically is a hinged lid or otherwise rotatable around an axis parallel to the primary plane of the lid. Since the enclosure preferably is a toilet bowl, the rotatable surface preferably is a toilet lid.

The spraying device preferably is mountable to the lid of the toilet bowl. Therefore, the spraying device preferably contains means for attaching it to the bottom side of the lid of a toilet. Said means cover any aid, appliance or tool that may be used to secure the device temporarily or permanently to the toilet lid. Non limiting examples of such means are a layer or drop of adhesive, double-sided sticking tape and Velcro. It is however, also possible to use a clamp, a hook, a screw, a bayonet fitting, a vacuum cup or similar means to attach the device to the lid. Another suitable way of attaching is via a mounting base which is permanently attached to the surface and equipping both the base plate and the device with cooperating, clickable, reversible fastening means. The latter configuration enables easy replacement and/or cleaning of the device and or exchange of consumables, including but not limited to e.g. the cartridge or batteries. Alternatively, a combination of different securing aids, appliances and/or tools might be used.

Thus, within the context of the invention, it is particularly preferred that the enclosure is a toilet bowl and the device is mountable to the lid of the toilet bowl.

### Recharging and dispensing orientation

The cap, the cartridge and the spraying device of the method of the present invention are constructed such that a spraying system comprising them can dispense liquid when it is in one orientation and its recharge is facilitated by gravity upon rotating the device to another orientation. For instance, when attached to toilet lid, the device can dispense a dose of cleanser when the lid is closed and is recharged when the lid is opened and closed again.

If the device - and hence also the cartridge and the cap - are intended to be attached to a toilet lid, the dispensing orientation matches the orientation of the device when the lid is in its closed position, whereas the recharging orientation reflects the orientation of the device when the lid is open.

The cap, cartridge and device function this way due to the relative placement of their parts in a dispensing orientation and a recharging orientation. In other words, the device is rotatable between a first recharging orientation and a second dispensing orientation. Consequently, the spraying system including the device, and the cartridge system (which in turn includes the cartridge and the cap) are rotatable in that way too.

Thus it will be clear that when the spraying system or the cartridge system is in operation, the rotation between the dispensing and recharging orientations will be rotation in a plane of rotation which is inclined with respect to a horizontal plane of reference. Thus, the plane of rotation preferably is at an angle of at least 60°, more preferably at least 75° and even more preferably between 80° and 90° with respect to a horizontal plane of reference. It is particularly preferred that this plane of rotation is substantially vertical. For example, the plane of rotation of a normally mounted toilet lid around its hinges is such a substantially vertical plane.

The angle of rotation between the dispensing orientation and the recharging orientation of the spraying device preferably is between 30° and 100°, more preferably between 60° and 120° and even more preferably between 80° and 100°.

The recharging orientation and the dispensing orientation are defined to facilitate the description of the cooperation between the features of the cap, the cartridge and the spraying device, respectively. However, from this description it will be clear to the skilled person that when the cap, the cartridge and/or the device is used, the capability of recharging is not limited to the exact recharging orientation as defined herein: Recharging can for example include several steps. An initial step would be collecting liquid in the neck of the cartridge and the trough of the cap, which at a later stage may be followed by uptake of the collected liquid into the mechanism of the spraying device. Moreover, as will become apparent below, the collecting of the liquid occurs as a gradual process upon rotation of the device. Similarly, the capability of the device to dispense the liquid is not to be understood to be limited to the dispensing orientation, because the device can be designed such as to permit deviations from the dispensing orientation when dispensing. Preferably, such deviations are small deviations, for instance deviations smaller than 15 degrees, more preferably smaller than 10 degrees.

In view of the above, with regard to cartridge, the recharging orientation corresponds to an orientation wherein the neck of the cartridge is below the reservoir.

### Features of the cap

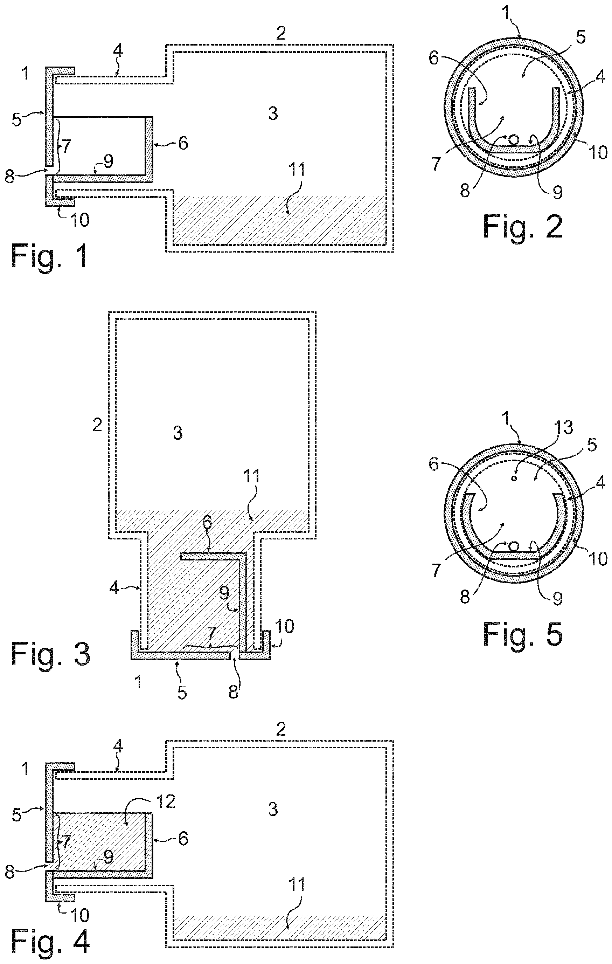

The features of the cap may be better understood by reference to the non-limiting example provided by the embodiment of the method of the present invention shown in Figures 1 and 2. Figure 1 schematically displays a longitudinal cross section of cap 1 according to the method of the invention, whilst it is attached to a cartridge 2. The cap 1 comprises a cover area 5. Figure 2 provides a cross section through the same schematic representation, perpendicular to the cross section of Figure 1. The cross section of Figure 2 is through the optional apron 10 and is depicted in the direction of the cover area 5. The cap 1 can function as a closure, because the cover area 5 covers the outward opening of the neck 4. Thus, the cap 1 is suitable for closing off the neck 4. To make the cap suitable for this purpose, it typically involves a means or combination of means to provide a tight seal between the cap and the rim of the neck and to keep the cap fastened to the cartridge. The seal may be provided by any conventional means or combination of such means to provide such a seal. Such means are well-known to the skilled person. For instance, the confronting surfaces of the cap and the rim of the neck may be made to tightly match, or a resilient member (for example an o-ring or similar liner) can be provided. Alternatively, or in combination therewith, a sealing contact may also be provided between the optional apron 10 and the neck 4. Suitable fastening means include for example a screw thread or a snap-on connection, e.g. provided by mating rims on the outer periphery of the neck 4 close to its outlet opening and on the apron 10 of the cap 1. The cap may for instance also be glued or welded in place.

### Collection trough

The cap also comprises a collection trough 6 extending from the cover area 5 on the inward side of the cap 1. The inward side of the cap is understood to be the side of the cap that is intended to face the opening of the neck of the cartridge. Therefore, when the cap is place on a suitable cartridge, the collection trough projects into the neck of the cartridge. The function of the collection trough is to retain a portion 12 of liquid 11 that flowed into the neck 4 of the cartridge 2 once that was brought into the recharging orientation, upon rotating it to the dispensing orientation as is illustrated by Figures 3 and 4.

To achieve this function, the collection trough 6 typically has a bottom 9 and walls extending from that bottom 9 in a direction that is upward when the cap 1 is in the dispensing orientation as depicted in Figures 1 and 4.

At least a side-wall portion 7 of the collection trough 6 is integral with the cover area 5. This may be realised for example by having a part of the cover area 5 form part of the side-wall of the trough 6 as in the embodiment represented in Figure 1. Thus, the trough 6 and the cap 1 can advantageously be manufactured as one part. Alternatively, a trough could for instance be manufactured separately and then at least a portion of the side wall of the trough can be made integral with part of the cover area 5 by gluing, welding or otherwise fastening it to the cap.

In general, the other side-wall portions and the bottom of the trough may have any suitable shape. The walls and bottom area may be flat or curved, or may include a combination of flat and curved portions. It is preferred that the wall surface of the collection trough is a smooth surface, for instance by including rounded edges, or by having essentially rounded wall portions. Such rounded, as depicted in Figure 2 are believed to facilitate guiding of any liquid 12 collected in the trough 6 towards the outlet orifice 8.

The volume of liquid that can be retained by the collection trough can be designed to match the requirements during use of the spraying device. Thus, this volume typically is at least equal to but preferably larger than the largest individual dose of liquid to be dispensed by the spraying device upon actuation, especially when the exact dosing volume is determined in the spraying device and not by the volume of the liquid collected in the trough. Thus, for most practical applications, the volume that is retainable by the trough is preferably between 0.5 and 10 ml, more preferably betweeen 0.75 and 5 ml, and even more preferably between 1 and 2 ml.

In order to make the cap suitable for closing off the neck of the cartridge, the trough should fit inside the neck of the cartridge. Preferably, the width of the trough 6 is such that it snugly fits in the neck 4 of the cartridge 2. In that way, the interaction between the collecting trough 6 and the neck 4 of the cartridge can be optimised to yield nearly complete or complete emptying of the cartridge upon repeated use. Figure 5 shows a cross section similar to that of Fig 2, but of another preferred cap embodiment. This embodiment provides an example in which the collection trough 6 snugly fits into the neck 4.

The shape of the collection trough 6 is preferably such that - when the device is in the recharging orientation - it facilitates collection of the liquid in the neck, and in particular in volume of the neck that is also inside the collection trough. Thus, the shape of the collection trough 6 is preferably such that little, and more preferably no, air is trapped in the collection trough once its interior volume fills with liquid 11, just after the cartridge has been brought into the recharging orientation. Therefore, it is preferred that the top side of the trough is essentially open to the interior volume (the reservoir) of the cartridge. Alternatively, part of the top side may be covered, as long as the functionality of the collection trough is not impeded.

In view of the same objective, namely efficient filling of the collection trough when the cartridge is in the recharging orientation, the height of the trough is preferably at least one quarter of the neck diameter, more preferably between one quarter and three quarters of the neck diameter and even more preferably between one third and two thirds of the diameter of the neck. Here, the height of the trough is the distance between the bottom of the trough 9 and the upper edge of any side-wall portion of the trough that determines the volume that can be captured by operation of the combination of cartridge and cap.

Similarly, the length of the collection trough can for instance be selected together with its width and depth to match the above volume requirements of the liquid portion 12 that can be captured by the trough. The length of the trough is understood as the distance the trough protrudes away from the cover area of the cap. Preferably, the length of the collection trough is between half and twice the length of the neck, more preferably between two thirds and four thirds of the length of the neck and even more preferably between three quarters and five quarters of the length of the neck. Here, the length of the neck is understood as the separation between the rim of the neck at its outer opening and the onset of the neck on the body of the cartridge.

### Orifice

The cover area 5 comprises a liquid outlet orifice 8 positioned close to the bottom 9 of the collection trough 6. In operation, if a liquid portion 12 is collected in the trough 6, the liquid can be discharged from the cartridge into the spraying device via the orifice. Thus, efficient emptying of the trough into the spraying device is facilitated by relatively low placement of the orifice. Therefore, it is preferred that the outlet orifice 8 is positioned such that the point of the orifice 8 that is closest to the bottom 9 of the trough 6 is at a distance from the bottom 9 of less than one quarter, more preferably less than one eighth of the height of the trough 6.

The outlet orifice is intended to guide liquid from the cartridge into the spraying device. Therefore, the outward opening of the orifice is preferably provided with suitable means to provide a leak tight connection with a corresponding liquid inlet opening of the spraying device.

The cover area 5 of the cap may suitably also comprise an air inlet opening 13, to facilitate emptying the liquid from the cartridge. The air inlet opening may be valved so as to allow influx of air but prevent unwanted efflux of liquid or air. Alternatively, the air inlet may also be made to mate with an air outlet of the spraying device.
Thus, the cap is typically adapted to mate with a corresponding receiving portion of the toilet cleaning device.

### Cap orientation

The efficacy of the trough in retaining the collected liquid 12 upon rotation of a cartridge provided with the cap from the recharging to the dispensing orientation depends on the orientation of the cap with respect to the plane of rotation. It is preferred that in operation the cap is placed in the cartridge such that in the dispensing orientation the side-wall portions of the trough extend upward from the bottom of the trough. Therefore, the confronting surfaces of the cap and any cartridge adapted to receive it preferably provide a means to ensure correct placement of the cap. Such means include for instance a lug on the neck of the cartridge and a mating recess in the optional apron 10 of the cap or any other known means to ensure the cap is properly placed on the cartridge.

### Manufacture of the cap

The cap may be made of any suitable material and is preferably made of a polymeric material, more preferably a thermoplastic material as understood by the person skilled in the art. It may be manufactured by any suitable technique, including for instance die-casting and injection moulding.

### Cartridge system

The present invention provides the method according to claim 1 comprising a cartridge system for a device for spraying an enclosure that is closable with a rotatable lid, said system comprising a cartridge (2) having a reservoir (3) opening into a neck (4) having an outlet opening, and a cap (1) according to the method of the invention, wherein the cap (2) is receivable by the outlet opening of the cartridge (2). Thus, the cartridge system essentially comprises a cap and a cartridge as described hereinbefore. Any preferences regarding the cap of the method of the invention or the cartridge for which that cap is adapted to be received by it are preferred for the cartridge system of the method of the invention too.

The cartridge system is preferably adapted to be received by the device for spraying an enclosure. Therefore, the cap and/or the cartridge may suitably be provided with means to enable secure attachment of the cartridge system to the spraying device. Examples of such means include for example lugs, ridges, protrusions, recesses, and screw threads. The spraying device is preferably provided with complementary means for attachment.

Analogous to the relevance of correct placement of the cap on the cartridge to ensure optimal efficacy of the trough of the cap in retaining the liquid, it is also relevant that the cartridge system including the cap can be correctly attached to any device for spraying an enclosure adapted to receive the cartridge system. Correct attachment may for instance be achieved by complementary mating structures on the cartridge system and the device. Alternatively, the shape of the cartridge may be designed to be asymmetric such that it can only be attached to the device in the right mutual orientation.

It is preferred that the cartridge system is replaceable, because this allows more efficient and more flexible use of a spraying system including the cartridge system. The spraying system may thus be used longer than the number of spray actuations that can be dispensed based on the volume of one cartridge, adding to the sustainability profile of the system. Moreover, the consumer may thus use different cartridge systems, comprising different types of liquid, e.g. with different sensory profiles or different efficacy. Therefore the cartridge system is preferably provided with a seal closing the inlet and outlet openings in the cap until attachment of the cartridge system to a device for spraying an enclosure.

The cartridge system is preferably adapted for a device for spraying a toilet bowl, wherein the device is preferably mountable to the lid of the toilet.

### Spraying system

The method of the invention includes a spraying system, comprising a device for spraying a liquid into an enclosure closable by a rotatable lid and a cartridge system according to the method of the invention, wherein the cartridge system is receivable by the spraying device. The device preferably is a device for spraying a cleansing liquid into a toilet bowl, and is mountable to a toilet lid.

Cleansing of an enclosure is understood to include one or more of cleaning, sanitising and disinfecting the inner surface of the enclosure as well as cleaning, sanitising and disinfecting of the air contained in the enclosure. Therefore the disinfecting or sanitising liquid cleanser used in the spraying system of the method of this invention preferably comprises at least one compound selected from the group comprising biocides, fragrances, essential oils, surfactants, solubilizers or hydrotropes, colorants and odour immobilisers. The liquid is preferably suitable for providing such cleansing efficacy upon spraying in a toilet bowl. Suitable compositions are known in the art.

In order to exploit the advantages provided by the cap and the cartridge system of the method of the present invention, the spraying device of the spraying system comprises a liquid spraying mechanism suitable for spraying in a preferred downward direction, wherein the reservoir 3 of the cartridge 2 communicates with the spraying mechanism via the collection trough 6 and the outlet orifice 8 of the cap 1.

In order for the device that is part of the spraying system to be suitable for spraying a liquid into the enclosure, it typically comprises means to extract liquid from the cartridge and means capable of delivering a liquid in an enclosure, in the form of droplets fine droplets (i.e. a mist or an aerosol). Typically, this delivery is realised by atomising or nebulising the liquid cleanser. These means for extracting and dispensing the liquid constitute parts of the spraying mechanism of the device. It is preferred that the spraying mechanism also includes means for metering an appropriate dose of cleansing liquid. The spraying mechanism may for example include a positive displacement pump, (*e.g*. a piston-operated or similar pump) that can perform the extraction, metering and dispensing function. Dispensing typically involves a nozzle or similar aperture. Alternative means of extraction, metering and dispensing are also contemplated. Such alternatives include for example a vibrating mesh spray actuator.

It is particularly beneficial if actuation of the spraying mechanism is responsive to the rotary motion of the device that is typically connected with opening and closing of the lid, since this will enable automated actuation of the device without the need for the user of the enclosure (the toilet) to take any action. Therefore, the actuation of the spraying mechanism is preferably controlled by an electronic control circuit. Such control circuits are well-known in the art. During a typical actuation cycle the control circuit should preferably be capable of detecting the orientation of the spraying system. It is preferred that the spraying system can only be actuated for dispensing the liquid when the device is in the dispensing orientation, for instance when the toilet lid is closed. In order to detect whether the device is in the recharging or the dispensing orientation, the electronic control circuit is preferably equipped with a tilt sensor or similar means to detect the orientation.

Tilt sensors are well known in the art. Non-limiting examples of such sensors that may be used to detect the orientation of the lid are, motion sensors, position switches (like a mercury switch, or a simple metal ball that moves from a first (inactive) position to second (active) position upon repositioning of the device and/or the toilet lid), accelerometers, electronic inclinometers, light sensors, sound sensors, pressure sensors and weight sensors.

The tilt sensor can for instance be incorporated in the electronic circuit or it can be connected to the control circuit as a separate unit. Advantageously, the tilt sensor can also serve as a safety feature, by configuring the control circuit to prevent or interrupt dispensing in case the device is rotated out of the dispensing orientation.

Preferably, the control circuit is capable of controlling the delay with which the device starts spraying after the device was brought into the dispensing orientation.

The electronic control circuit - if present - is suitable for controlling the spray mechanism, but does not have to be limited to that functionality. For example, it can also be capable of actuating a speaker, buzzer or optical signalling means (e.g. an LED), for instance to inform the user that the device is about to be actuated or that the device is running out of cleanser liquid or requires battery replacement.

In order to provide electric power to the control circuit and the actuator, the device can for instance be connectable to an external power source, such as electric mains or an external battery. Preferably, the spraying device is adapted for receiving a removable power source, for example one or more batteries.

### Method and use

The invention is a method for repeatedly feeding a cleansing liquid into a device for spraying a cleansing liquid into an enclosure closable by a rotatable lid. This method is can also be explained by the non-limiting example provided in Figures 1,2,3 and 4. Said method comprises the steps of
a. providing a spraying system said spraying system comprising the device for spraying the liquid into the enclosure closable by the rotatable lid and a cartridge system for the device for spraying the enclosure that is closable with the rotatable lid; said system comprising a cartridge having a reservoir opening into a neck having an outlet opening, and a cap for said cartridge; wherein the cap is suitable for closing off the neck, and wherein the cap comprises a cover area and a collection trough extending from the cover area on the inward side of the cap; wherein at least a side-wall portion of the collection trough is integral with the cover area and wherein the cover area comprises a liquid outlet orifice positioned close to the bottom of the collection trough; wherein the cap is receivable by the outlet opening of the cartridge; wherein the cartridge 2 is attached to the device and wherein the cartridge 2 comprises the cleansing liquid 11;
b. bringing the device and the cartridge 2 in an orientation wherein cleansing liquid can flow from the reservoir 3 into the neck 4;
c. rotating the device and the cartridge 2 from that orientation to an orientation wherein the side-walls of the collection trough 6 are in an upward direction with respect to the bottom 9 of the trough 6, such that a portion 12 of the cleansing liquid is collected in the trough 6;
d. emptying said portion 12 of cleansing liquid into the liquid spraying mechanism of the spraying device via the outlet orifice 8; and
e. optionally repeating steps b to d.
bringing the device and the cartridge 2 in an orientation wherein the neck 4 of the cartridge is below the reservoir 3

The orientation depicted in Figure 3 corresponds to the situation after carrying out step b. Typically the orientation of step b involves a situation wherein the neck 4 of the cartridge is below the reservoir 3. The orientation depicted in Figure 4 corresponds to the situation after carrying out step c. The method according to the invention exploits the advantages provided by the cap and the cartridge according to the invention, which are incorporated in the spraying system. Thus the cap of the method of the present invention is used in combination with a cartridge adapted to receive the cap and provides the advantages that during and immediately after step b cleansing liquid 11 flows into the neck of the device and is retained in the collection trough 6, thereby allowing complete emptying of the reservoir upon repeating the steps b to d. By virtue of the same function, in particular of the collection trough 6 in cooperation with the outlet orifice 8, the cap also ensures that no air is fed into the spraying mechanism of the spraying system during these cycles, at least not until the reservoir is emptied.

As for the other aspects of the invention, it is preferred that the enclosure is a toilet bowl and wherein the spraying system is mountable to the toilet lid.

The movement required in step b is not restricted to rotation in a particular direction, as long as the spraying system ends up in an orientation in which the neck of the cartridge is below the reservoir recharging orientation. On the other hand, in step c the movement should be rotation such that a portion 12 of the cleansing liquid 11 is collected in the trough 6. Optimal collection and retention of the portion 12 of the cleansing liquid is obtained when the plane of rotation extends from the closing area 5 of the cap 1 in the same direction as the trough 2 and is substantially parallel to the upward direction of the side-wall portions of the trough with respect to its bottom 9, wherein the rotation is in such a direction that the upper edge of the trough 6 rotates in the direction of the trough bottom 9.

Any features that have been described as preferred for the cap, the cartridge system or the spraying system, respectively, are likewise equally preferred for the cap, cartridge system or spraying system as it is employed in the method of the present invention.

In view of the advantages of the cap of the method of the present invention, the disclosure also provides use of the cap 1 not forming part of the invention to enable emptying of a cartridge 2 upon repeated rotational movement of the cartridge 2; wherein the cartridge 2 comprises a reservoir 3 opening into a neck 4, and wherein the cartridge 2 and the cap 1 are configured for the cap 1 to be received by the neck 4 of the cartridge 2.

As for the other aspects not forming part of the invention, this use preferably relates to use wherein the cartridge is for a device for spraying an enclosure closable by a rotatable lid and wherein even more preferably the enclosure is a toilet bowl and the device is mountable to the lid of the toilet bowl.

Any features that have been described as preferred for the cap, the cartridge system or the spraying system, respectively, are likewise equally preferred for the cap, cartridge system or spraying system as it is employed in this use of a cap not forming part of the present invention.

## Claims

1. Method for repeatedly feeding a cleansing liquid (11) into a device for spraying a cleansing liquid into an enclosure closable by a rotatable lid, said method comprising the steps of
a. providing a spraying system, said spraying system comprising the device for spraying a liquid into the enclosure closable by the rotatable lid and a cartridge system for the device for spraying the enclosure that is closable with the rotatable lid; said system comprising a cartridge (2) having a reservoir (3) opening into a neck (4) having an outlet opening, and a cap (1) for said cartridge (2); wherein the cap (1) is suitable for closing off the neck (4), and wherein the cap (1) comprises a cover area (5) and a collection trough (6) extending from the cover area (5) on the inward side of the cap (1); wherein at least a side-wall portion (7) of the collection trough (6) is integral with the cover area (5) and wherein the cover area (5) comprises a liquid outlet orifice (8) positioned close to the bottom (9) of the collection trough (6); wherein the cap (1) is receivable by the outlet opening of the cartridge (2); wherein the cartridge system is receivable by the spraying device; wherein the cartridge (2) is attached to the device and wherein the cartridge (2) comprises the cleansing liquid (11);
b. bringing the device and the cartridge (2) in an orientation wherein cleansing liquid can flow from the reservoir (3) into the neck (4);
c. rotating the device and the cartridge (2) from that orientation to an orientation wherein the side-walls of the collection trough (6) are in an upward direction with respect to the bottom (9) of the trough (6), such that a portion (12) of the cleansing liquid is collected in the trough (6);
d. emptying said portion (12) of cleansing liquid into the liquid spraying mechanism of the spraying device via the outlet orifice (8); and
e. optionally repeating steps b to d.

2. Method according to claim 1, wherein the enclosure is a toilet bowl and wherein the spraying system is mountable to the toilet lid.

3. Method according to claim 1 or claim 2, wherein the cartridge is for the device for spraying the enclosure closable by the rotatable lid.

4. Method according to any one of claims 1 to 3, wherein the width of the trough (6) is such that it snugly fits in the neck (4) of the cartridge (2) and the height of the trough (6) is between one third and three quarters of the diameter of the neck (4).

5. Method according to any one of claims 1 to 4, wherein the length of the trough (6) is between three quarters and five quarters of the length of the neck (4).

6. Method according to any one of claims 1 to 5, wherein the outlet orifice (8) is positioned such that the point of the orifice (8) that is closest to the bottom (9) of the trough (6) is at a distance from the bottom (9) of less than one eighth of the height of the trough (6).

7. Method according to any one of claims 1 to 6, wherein the device comprises the liquid spraying mechanism suitable for spraying in a downward direction, and wherein the reservoir (3) of the cartridge (2) communicates with the spraying mechanism via the collection trough (6) and the outlet orifice (8) of the cap (1).

## Patentansprüche

1. Verfahren zum wiederholtem Einleiten von Reinigungsflüssigkeit (11) in eine Vorrichtung, um eine Reinigungsflüssigkeit in eine Umschließung zu sprühen, die durch einen drehbaren Deckel verschließbar ist, wobei das Verfahren die folgenden Schritte umfasst:
a. Bereitstellen eines Sprühsystems, wobei das Sprühsystem die Vorrichtung zum Sprühen einer Flüssigkeit in die durch einen drehbaren Deckel verschließbare Umschließung und ein Patronensystem für die Vorrichtung zum Sprühen in die durch einen drehbaren Deckel verschließbare Umschließung umfasst; wobei das System eine Patrone (2) mit einem Vorratsbehälter (3), der in einen Hals (4) mündet, der eine Auslassöffnung besitzt, und mit einer Kappe (1) für die Patrone (2) aufweist; wobei die Kappe (1) den Hals (4) verschließen kann und wobei die Kappe (1) einen Abdeckungsbereich (5) und eine Sammelwanne (6), die sich von dem Abdeckungsbereich (5) auf der Innenseite der Kappe (1) erstreckt, aufweist; wobei wenigstens ein Seitenwandabschnitt (7) der Sammelwanne (6) mit dem Abdeckungsbereich (5) einteilig ausgebildet ist und wobei der Abdeckungsbereich (5) eine Flüssigkeitsauslassöffnung (8) aufweist, die in der Nähe des Bodens (9) der Sammelwanne (6) positioniert ist; wobei die Kappe (1) von der Auslassöffnung der Patrone (2) aufgenommen werden kann; wobei das Patronensystem von der Sprühvorrichtung aufgenommen werden kann; wobei die Patrone (2) an der Vorrichtung befestigt ist und wobei die Patrone (2) die Reinigungsflüssigkeit (11) enthält;
b. Bringen der Vorrichtung und der Patrone (2) in eine Orientierung, in der die Reinigungsflüssigkeit von dem Vorratsbehälter (3) in den Hals (4) fließen kann;
c. Drehen der Vorrichtung und der Patrone (2) aus dieser Orientierung in eine Orientierung, in der die Seitenwände der Sammelwanne (6) in Bezug auf den Boden (9) der Wanne (6) nach oben orientiert sind, derart, dass ein Teil (12) der Reinigungsflüssigkeit in der Wanne (6) gesammelt wird;
d. Entleeren des Teils (12) der Reinigungsflüssigkeit in den Flüssigkeitssprühmechanismus der Sprühvorrichtung durch die Auslassöffnung (8); und
e. optional Wiederholen der Schritte b bis d.

2. Verfahren nach Anspruch 1, wobei die Umschließung eine Toilettenschlüssel ist und wobei das Sprühsystem an dem Toilettendeckel montiert werden kann.

3. Verfahren nach Anspruch 1 oder Anspruch 2, wobei die Patrone für die Vorrichtung zum Sprühen in die durch den drehbaren Deckel verschließbare Umschließung bereitgestellt ist.

4. Verfahren nach einem der Ansprüche 1 bis 3, wobei die Breite der Wanne (6) derart ist, dass diese eng in den Hals (4) der Patrone (2) passt, und die Höhe der Wanne (6) im Bereich von einem Drittel bis drei Viertel des Durchmessers des Halses (4) liegt.

5. Verfahren nach einem der Ansprüche 1 bis 4, wobei die Länge der Wanne (6) im Bereich von drei Viertel bis fünf Viertel der Länge des Halses (4) liegt.

6. Verfahren nach einem der Ansprüche 1 bis 5, wobei die Auslassöffnung (8) so positioniert ist, dass der Punkt der Öffnung (8), der sich am nächsten beim Boden (9) der Wanne (6) befindet, um eine Strecke vom Boden (9) entfernt ist, die kleiner als ein Achtel der Höhe der Wanne (6) ist.

7. Verfahren nach einem der Ansprüche 1 bis 6, wobei die Vorrichtung den Flüssigkeitssprühmechanismus umfasst, der in einer Abwärtsrichtung sprühen kann, und wobei der Vorratsbehälter (3) der Patrone mit dem Sprühmechanismus über die Sammelwanne (6) und die Auslassöffnung (8) der Kappe (1) kommuniziert.

## Revendications

1. Procédé d'introduction répétitive d'un liquide nettoyant (11) dans un dispositif pour pulvériser un liquide nettoyant dans une enceinte pouvant être fermée par un couvercle pivotant, ledit procédé comprenant les étapes de
a. fourniture d'un système de pulvérisation, ledit système de pulvérisation comprenant le dispositif pour pulvériser un liquide dans l'enceinte pouvant être fermée par le couvercle pivotant et un système de cartouche pour le dispositif pour la pulvérisation de l'enceinte qui peut être fermée avec le couvercle pivotant ; ledit système comprenant une cartouche (2) présentant un réservoir (3) s'ouvrant dans une encolure (4) présentant une ouverture de sortie, et un capuchon (1) pour ladite cartouche (2) ; dans lequel le capuchon (1) est approprié pour fermer l'encolure (4), et dans lequel le capuchon (1) comprend une surface de couverture (5) et une cuve de recueil (6) s'étendant à partir de la surface de couverture (5) sur le côté intérieur du capuchon (1) ; dans lequel au moins une portion de paroi latérale (7) de la cuve de recueil (6) est d'une pièce avec la surface de couverture (5) et dans lequel la surface de couverture (5) comprend un orifice de sortie de liquide (8) positionné à proximité du fond (9) de la cuve de recueil (6) ; dans lequel le capuchon (1) peut être reçu par l'ouverture de sortie de la cartouche (2) ; dans lequel le système de cartouche peut être reçu par le dispositif de pulvérisation ; dans lequel la cartouche (2) est fixée au dispositif et dans lequel la cartouche (2) comprend le liquide nettoyant (11) ;
b. la mise du dispositif et de la cartouche (2) dans une orientation dans laquelle le liquide nettoyant peut s'écouler à partir du réservoir (3) dans l'encolure (4) ;
c. la rotation du dispositif et de la cartouche (2) de cette orientation vers une orientation dans laquelle les parois latérales de la cuve de recueil (6) se trouvent dans une direction vers le haut par rapport au fond (9) de la cuve (6), de telle sorte qu'une portion (12) du liquide nettoyant est recueillie dans la cuve (6) ;
d. la vidange de ladite portion (12) de liquide nettoyant dans le mécanisme de pulvérisation de liquide du dispositif de pulvérisation via l'orifice de sortie (8) ; et
e. éventuellement la répétition des étapes b à d.

2. Procédé selon la revendication 1, dans laquelle l'enceinte est une cuvette de toilettes et dans laquelle le système de pulvérisation peut être monté sur le couvercle de toilettes.

3. Procédé selon la revendication 1 ou la revendication 2, dans lequel la cartouche est destinée au dispositif pour pulvérisation de l'enceinte pouvant être fermée par le couvercle pivotant.

4. Procédé selon l'une quelconque des revendications 1 à 3, dans lequel la largeur de la cuve (6) est telle qu'elle s'ajuste confortablement dans l'encolure (4) de la cartouche (2) et la hauteur de la cuve (6) se trouve entre un tiers et quatre quarts du diamètre de l'encolure (4).

5. Procédé selon l'une quelconque des revendications 1 à 4, dans lequel la longueur de la cuve (6) se trouve entre trois quarts et cinq quarts de la longueur de l'encolure (4).

6. Procédé selon l'une quelconque des revendications 1 à 5, dans lequel l'orifice de sortie (8) est positionné de sorte que le point de l'orifice (8) qui est le plus proche du fond (9) de la cuve (6) se trouve à une distance à partir du fond (9) inférieure à un huitième de la hauteur de l'encolure (6).

7. Procédé selon l'une quelconque des revendications 1 à 6, dans lequel le dispositif comprend le mécanisme de pulvérisation de liquide approprié pour une pulvérisation dans une direction vers le bas, et dans lequel le réservoir (3) de la cartouche (2) communique avec le mécanisme de pulvérisation via la cuve de recueil (6) et l'orifice de sortie (8) du capuchon (1).
